(19) **Europäisches Patentamt / European Patent Office / Office européen des brevets**

(11) **EP 3 346 287 A1**

(12) **EUROPEAN PATENT APPLICATION**
published in accordance with Art. 153(4) EPC

(43) Date of publication:
**11.07.2018 Bulletin 2018/28**

(51) Int Cl.:
*G01S 17/58* (2006.01)   *G01B 11/24* (2006.01)
*G01B 21/00* (2006.01)   *G01C 3/06* (2006.01)
*G01P 3/36* (2006.01)   *G01S 17/89* (2006.01)

(21) Application number: **16841691.5**

(22) Date of filing: **26.08.2016**

(86) International application number:
**PCT/JP2016/074907**

(87) International publication number:
**WO 2017/038659 (09.03.2017 Gazette 2017/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **01.09.2015 JP 2015171785**

(71) Applicant: **The University Of Tokyo**
**Tokyo 113-8654 (JP)**

(72) Inventors:
• **WATANABE, Yoshihiro**
**Tokyo 113-8654 (JP)**
• **MIYASHITA, Leo**
**Tokyo 113-8654 (JP)**
• **YONEZAWA, Ryota**
**Tokyo 113-8654 (JP)**
• **ISHIKAWA, Masatoshi**
**Tokyo 113-8654 (JP)**

(74) Representative: **Piotrowicz, Pawel Jan Andrzej et al**
**Venner Shipley LLP**
**Byron House**
**Cambridge Business Park**
**Cowley Road**
**Cambridge CB4 0WZ (GB)**

(54) **MOTION DETECTION DEVICE AND THREE-DIMENSIONAL SHAPE MEASUREMENT DEVICE USING SAME**

(57)     The present invention relates to technology for detecting three-dimensional motion of an object in a non-contact manner, at high speed, and with comparatively high precision. A speed detection section 11 detects speed of an object using a first laser beam 111 that is irradiated towards an object 100, and is reflected by the object 100. A distance detection section 12 detects speed of the object 100 using a second laser beam 121 that is irradiated towards the object 100, and is reflected by the object 100. The second laser beam 121 is configured to be irradiated at substantially the same time and to substantially the same position as the first laser beam 111. A motion calculation section 13 calculates motion of the object 100 using information on orientation of the first and second laser beams, the speed, and the distance.

FIG.1

**Description**

Technical Field

The present invention relates to technology for detecting motion of a physical object, and to technology for measuring the three-dimensional shape of a physical object using the detected motion.

Background Art

Conventionally, detecting motion of an unknown physical object has played an important role in various applications. For example, in non-patent publication 1 below, technology has been proposed where motion of an unknown physical object is detected and utilized as an input device.

As technology for detecting motion of an unknown physical object, a contact-type sensor is known. For example, an acceleration sensor, GPS, gyro sensor, magnetic field sensor or the like is incorporated into a smartphone or game controller, and motion information that has been detected is used in an interaction between a user and a system. A motion detection system that uses markers, ultrasound and magnets is also being developed (non-patent publications 2 and 3 below). However, these contact-type sensors have restrictions in that they must be attached to a physical object in advance, and there is a problem in that they are difficult to use in motion detection of an unspecified physical object.

Techniques for estimating motion in a non-contact manner using a camera are therefore being actively researched. For example, with a technique that uses a color camera, changes in position and posture of a physical object over time are obtained by using various constant feature quantities (non-patent publications 4 and 5 below). Technology that estimates motion of a physical object using a depth camera is also being proposed (non-patent publications 6 and 7 below) . However, with a motion detection technique that uses this type of camera it is necessary to compute feature point detection and corresponding point search that uses image information. The calculation cost for this is generally large, which means that if this type of technology is used it is difficult to realize real-time motion detection.

Further, in techniques that utilize feature points within camera images, image information is simply used, without acquiring motion of a physical object physically. As a result, with this technology there is also a problem in that motion detection capability is largely dependent on shape and texture of the physical object.

On the other hand, sensors using a TOF (Time-of-flight) method and Doppler effect method have make it possible to perform non-contact and physical motion detection even for an unknown object. In particular, sensors such as a laser range-finder (hereafter referred to in this specification as "LRF") and a laser Doppler velocimeter (hereafter referred to in this specification as "LDV), that use lasers, have high directivity and long working distance. This makes these sensors effective in cases where moving objects are selectively measured. However, with measurement using these sensors it is only possible to acquire low level motion information in fragments, such as distance, and speed in the laser direction etc, and it is not possible to acquire three-dimensional rotation and translation movement of an object.

Citation List

Non-patent Literature

[Non-patent publication 1] Zerroug, A., Cassinelli, A. and Ishikawa, M.: Invoked computing: Spatial audio and video AR invoked through miming, In Proc. VRIC '11, 2011.

[Non-patent publication 2] Vlasic, D., Adelsberger, R., Vannucci, G., Barnwell, J., Gross, M., Matusik, W., Popovi'c, J. : Practical Motion Capture in Everyday Surroundings, ACM Trans. Graph., 26(3), 2007.

[Non-patent publication 3] Ketabdar, H., Yu"ksel, K. A. and Roshandel, M.: MagiTact: Interaction with Mobile Devices Based on Compass (Magnetic) Sensor, In Proc. ACM IUI '10, 2010.

[Non-patent publication 4] Klein, G. and Murray, D.: Parallel Tracking and Mapping for Small AR Workspaces, In Proc. ISMAR '07, 2007.

[Non-patent publication 5] Lepetit, V., Moreno-Noguer, F. and Fua, P.: EPnP: An Accurate O(n) Solution to the PnP Problem, Int. J. Comput. Vision, 81(2), 2009.

[Non-patent publication 6] Granger, S. and Pennec, X.: Multi-scale EM-ICP: A Fast and Robust Approach for Surface Registration, In Proc. ECCV '02, 2002.

[Non-patent publication 7] Shotton, J., Fitzgibbon, A., Cook, M., Sharp, T., Finocchio, M., Moore, R., Kipman, A. and Blake, A.: Real-Time Human Pose Recognition in Parts from a Single Depth Image, In Proc. IEEE CVPR '11, 2011.

SUMMARY OF THE INVENTION

Problems To Be Solved By The Invention

The present invention has been conceived in view of the above-described circumstances. One main objective of the present invention is to provide technology for detecting motion of a physical object in a non-contact manner, at high speed, and with a comparatively high accuracy. Another objective of the present invention is to provide technology that is capable of estimating three-dimensional shape of a physical object, using motion information that has been detected.

Means Of Solving The Problems

Means for solving the above-described problem can be described as in the following aspects.

(Aspect 1)

A motion detection device, comprising a speed detection section, a distance detection section and a motion calculation section, wherein:

the speed detection section irradiates a first laser beam towards an object and detects speed of the object using the first laser beam that has been reflected by the object;
the distance detection section irradiates a second laser beam towards the object and detects distance to the object using the second laser beam that has been reflected by the object;
the second laser beam is configured to be irradiated at substantially the same time and to substantially the same position as the first laser beam; and
the motion calculation section calculates motion of the object using information on orientation of the first and second laser beams, the speed, and the distance.

(Aspect 2)

The motion detection device of aspect 1, wherein the first laser beam and the second laser beam irradiate the object on substantially the same axis.

(Aspect 3)

The motion detection device of aspect 1 or aspect 2, wherein the motion calculation section calculates the motion using information on the speed and the distance at a plurality of points on the object.

(Aspect 4)

The motion detection device of any one of aspects 1 to 3, wherein motion of the object is rotational and translational motion of the object.

(Aspect 5)

The motion detection device of any one of aspects 1 to 4, further comprising a direction control section, wherein: the direction control section controls orientation of the first laser beam and the second laser beam.

(Aspect 6)

The motion detection device of any one of aspects 1 to 5, wherein the motion calculation section calculates irradiation position p of the first and second laser beams on the object using information on the orientation of the first and second laser beams and the distance, converts the irradiation position p to a position q in a different coordinate system, and calculates motion of the object using the position q and the speed.

(Aspect 7)

The motion detection device of any one of aspects 1 to 6, wherein the first laser beam and the second laser beam have different wavelengths.

(Aspect 8)

A three-dimensional shape measurement device provided with the motion detection device of any one of aspects 1 to 7, a shape detection section and a three-dimensional shape calculation section, wherein:

the shape detection section detects shapes at specified points on the object in time series; and
the three-dimensional shape calculation section calculates a three-dimensional shape of the object using information on the shapes that have been detected in time series and the motion.

(Aspect 9)

A motion detection method, comprising: a step of detecting speed of an object using a reflected beam of a first laser beam that has been irradiated towards the object;
a step of detecting distance to the object using a reflected beam of a second laser beam that has been irradiated towards the object; and
a step of calculating motion of the object using information on orientation of the first laser beam and the second laser beam, the speed, and the distance.

Effect Of The Invention

According to the present invention it is possible to detect motion of a physical object in a non-contact manner, at high speed, and with comparatively high precision. Also, according to the present invention it is possible to estimate the three-dimensional shape of an object using information on motion that has been detected.

Brief Description Of The Drawings

Fig. 1 is an explanatory drawing for describing the schematic structure of a motion detection device of a first embodiment of the present invention.
Fig. 2 is an explanatory drawing for describing a scanning pattern of a laser beam in the device of Fig. 1.
Fig. 3 is a flowchart for describing a motion detection method using the device of Fig. 1.
Fig. 4 is an explanatory drawing for describing the schematic structure of a motion detection device of a second embodiment of the present invention.
Fig. 5 is is an explanatory drawing for describing the schematic structure of a three-dimensional shape measurement device of a third embodiment of the present invention.
Fig. 6 is an explanatory drawing for describing a three-dimensional measurement method using the device of Fig. 5.

Description of the Embodiments

(First Embodiment)

A motion detection device of a first embodiment of the present invention will be described in the following with reference to the attached drawings.

(Structure Of First Embodiment)

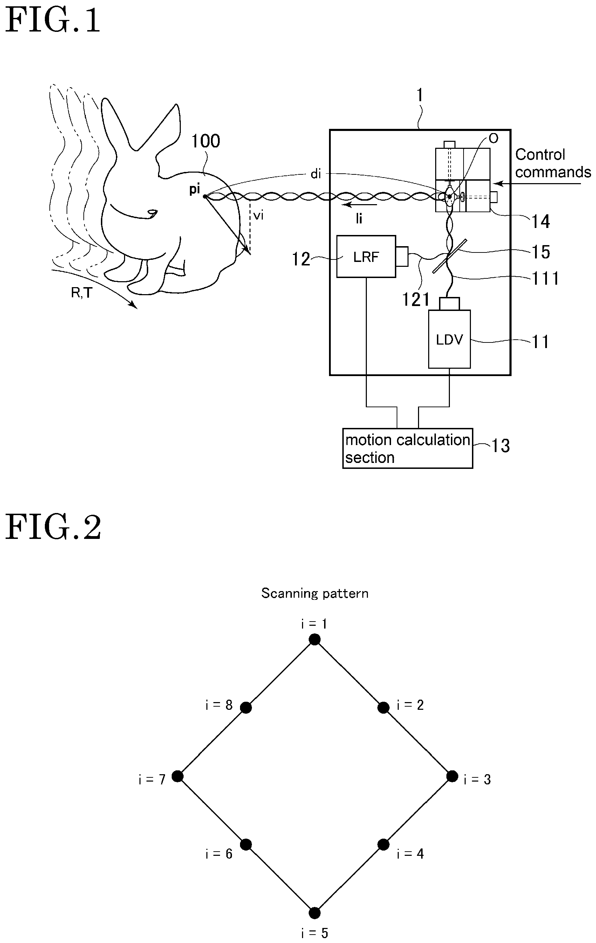

A motion detection device 1 of a first embodiment of the present invention mainly comprises a speed detection section 11, distance detection section 12 and motion calculation section 13 (refer to Fig. 1). The motion detection device 1 of this embodiment additionally comprises a direction control section 14 and a dichroic mirror 15.

(Speed Detection Section)

The speed detection section 11 is configured to irradiate a first laser beam 111 towards an object 100. The speed detection section 11 is also configured to receive the first laser beam 111 that has been reflected by the object 100, and detect speed of the object 100 using this received laser beam. Specifically, a laser Doppler velocimeter (LDV) for detecting movement speed of an object using the Doppler effect is used as the speed detection section 11 of this embodiment. When using an LDV, movement speed of the object is detected in the travel direction of the laser.

The first laser beam 111 of the speed detection section 11 has a wavelength that transmits the dichroic mirror 15.

(Distance Detection Section)

The distance detection section 12 irradiates a second laser beam 121 towards the object and detects distance to the object 100 using the second laser beam 121 that has been reflected by the object 100. Specifically, a laser rangefinder (LRF) that measures flight time taken for a reflected beam to return, and performs distance measurement to an object, is used as the distance detection section 12 of this embodiment.

The second laser beam 121 of the distance detection section 12 has a wavelength that is reflected by the dichroic mirror 15, and in this way it is possible to irradiate the first laser beam 111 and the second laser beam 121 to the object 100 on substantially the same axis.

Also, by making the first laser beam 111 and the second laser beam 121 coaxial it becomes possible to irradiate the second laser beam 121 to the same position as the first laser beam 111, regardless of the position of the object 100.

Also, the first laser beam 111 and the second laser beam 121 have different wavelengths to the extent that wavelengths are separable by the dichroic mirror 15.

(Direction Control Section)

The direction control section 14 is configured to control orientation of the first laser beam 111 and the second laser beam 121. Specifically, a so-called Galvano scanner is used as the direction control section 14 of this embodiment. A Galvano scanner is an instrument that is capable of changing direction of a light beam at high speed by changing a mirror angle. The direction control section 14 of this embodiment can control direction of a laser beam by causing a Galvano mirror to rotate based on a control instruction from a control section (not shown). As this type of Galvano scanner it is possible to use an already existing device, and so more detailed description will be omitted.

By reflecting the first laser beam 111 and the second laser beam 121, that are coaxial, using a mirror, the direction control section 14 of this embodiment is capable of irradiating a multiplexed laser beam, in a state where angles of these laser beams are made coincident, towards the object 100. Also, the direction control section 14 of this embodiment can irradiate a leaser beam to a plurality of points $p_i$, within a very small time interval of an extent that motion of the object 100 can be ignored, by causing mirror angle to change at high speed.

One example of a scanning pattern of the direction control section 14 of this embodiment is shown in Fig. 2. With this example, a mirror is operated so as to trace a square shape, and at positions $p_i$, for i=1 to i=8, speed and distance are acquired for a single cycle. The direction control section 14 of this embodiment can irradiate a laser beam to a plurality of points $p_i$ for a single cycle within a very short time interval. Also, with this embodiment, while movement speed is made fast between adjacent positions $p_i$, by making movement speed of a laser at each position temporarily zero or low speed (that is, making laser beam irradiation time long) it is possible to improve measurement precision.

Detailed operation of the direction control section 14 will be described later.

(Motion Calculation Section)

The motion calculation section 13 is configured to calculate motion of the object 100 using information such as orientation $l_i$ of the first laser beam 111 and the second laser beam 121 from the direction control section 14 to the object 100, speed $v_i$ that has been acquired by the speed detection section 11, and distance $d_i$ that has been acquired by the distance detection section 12. Here, the motion calculation section 13 is configured to calculate motion using information such as speed $v_i$ and distance $d_i$ for a plurality of points $p_i$ on the object 100.

The motion calculation section 13 of this embodiment is also configured to calculate rotation R and translation T of the object as motion.

More specifically, the motion calculation section 13 of this embodiment is configured to calculate irradiation position $p_i$ of the first and second laser beams on the object 100 using information on orientation $l_i$ of the first and second laser beams and distance $d_i$, convert irradiation position $p_i$ to position $q_i$ in a different coordinate system, and calculate motion of the object 100 by using speed $v_i$ and position $q_i$.

Detailed operation of the motion calculation section 13 will be described later.

(Operation Of First Embodiment)

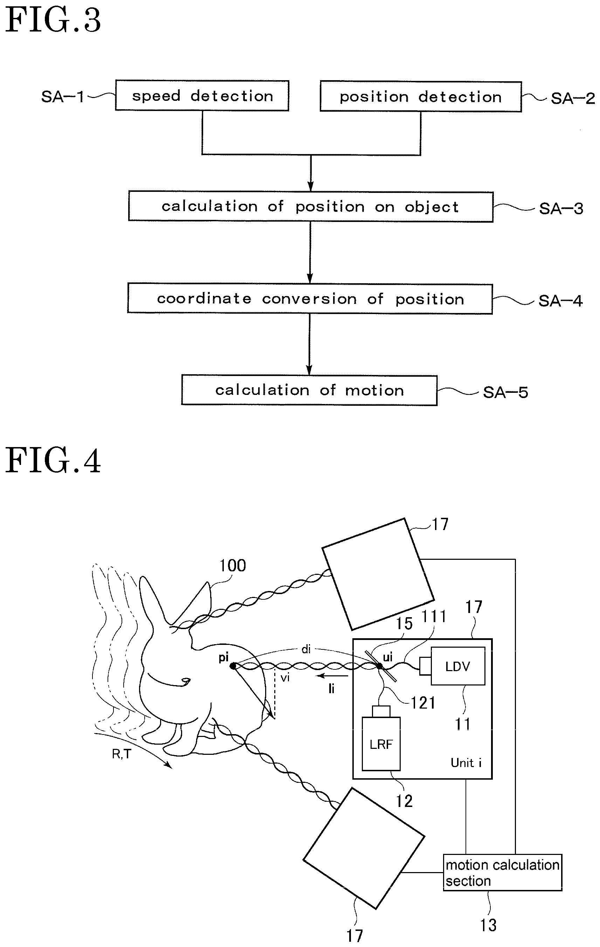

Next, a motion detection method that uses the previously described motion detection device will be described with further reference to Fig. 3.

(Step SA-1 in Fig. 2)

The first laser beam 111 of the speed detection section 11 is irradiated to the object 100 by means of the dichroic mirror 15 and the direction control section 14. It should be noted that here the position and shape of the object 100 do not need to be known.

The speed detection section 11 can detect speed of the object 100 by receiving a reflected beam. Also, with this embodiment, it is possible to acquire speed $v_i$ at a plurality of positions $p_i$, by scanning direction of the first laser beam 111 based on a control signal from the direction control section 14. Laser beam orientation $l_i$ corresponding to position $p_i$ or speed $v_i$ can be acquired by detecting mirror angle of the direction control section 14, or by using control instruction values to the direction control section 14.

(Step SA-2 in Fig. 2)

On the other hand, the second laser beam 121 of the distance detection section 12 is irradiated to the object 100 by means of the dichroic mirror 15 and the direction control section 14. The second laser beam 121 is superimposed on the first laser beam 111 by the dichroic mirror 15, making the two laser beams coaxial. This means that with this embodiment, there is the advantage that it is possible to irradiate the first laser beam 111 and the second laser beam 121 simultaneously to the same position on the object 100, even if position and shape of the object 100 are unknown.

The distance detection section 12 can detect distance from the distance detection section 12 to the object 100 by receiving a reflected beam. It should be noted that with this example, distance from the direction control section 14 (specifically, the Galvano mirror) to the object is calculated by knowing distance from the distance detection section 12 to the direction control section 14.

With this embodiment, by scanning direction of the second laser beam 121 coaxially to the first laser beam 111 using the direction control section 14, it is possible to acquire distance $d_i$ at a plurality of positions $p_i$. Orientation $l_i$ of the laser beam corresponding to position $p_i$ is the same as for the case of corresponding speed $v_i$.

In description from here onwards it is assumed that the first laser beam 111 and the second laser beam 121 of this embodiment are repetitively scanned in the pattern shown in Fig. 2.

(Step SA-3 and SA-4 in Fig. 2)

Next, the motion calculation section 13 calculates position $p_i$ on the object. Here, position $p_i$ where the laser beam has been irradiated can be calculated as shown in equation (1) below, using distance $d_i$ that has been measured by the distance detection section 12, and the known light beam direction $l_i$. With this embodiment, this position $p_i$ is converted to position (position in a different coordinate system) $q_i$ with a centroid of measurement point $p_i$ for one period as a reference. With this embodiment, this position $q_i$ is used in calculation of motion information.

$$\boldsymbol{p_i} \quad = \quad \boldsymbol{u_i} + d_i \boldsymbol{l_i} \qquad\qquad (1)$$

$$\boldsymbol{q_i} \quad = \quad \boldsymbol{p_i} - \frac{1}{m} \sum_{j=1}^{m} \boldsymbol{p_j} \qquad\qquad (2)$$

It should be noted that $u_i$ here is minute correction value for correcting offset accompanying rotation of the Galvano mirror.

(Step SA-5 in Fig. 2)

Measurement position q' for a measurement point at minute time $\delta t$ after a given measurement time satisfies equations (3) and (4) below. It is then possible to obtain equation (5) below by deleting q' from both equations. However, R is a rotation matrix corresponding to rotation of the object during the minute time $\delta t$, and T is a translation vector corresponding to translation.

$$\delta t v_i \quad = \quad \boldsymbol{l}_i \cdot (\boldsymbol{q}_i' - \boldsymbol{q}_i) \tag{3}$$

$$\boldsymbol{q}_i' \quad = \quad R\boldsymbol{q}_i + \boldsymbol{T} \tag{4}$$

$$\delta t v_i = \boldsymbol{l}_i \cdot ((R - I)\,\boldsymbol{q}_i + \boldsymbol{T}) \tag{5}$$

Further, it is assumed that rotation of the object within the minute time δt is minute, and rotation matrix R can be approximated as in equation (6) below, using respective rotation angles α, β, and γ corresponding to roll, pitch and yaw. If this is done, obtained motion x of an object can be represented as the solution of matricial equation (7) below. As a result calculation cost is reduced, and it is possible to improve real time capability of the motion detection. However, $A^+$ is a pseudo inverse matrix of a coefficient matrix, which will be described later. With this embodiment a number n of unknowns (number of elements of vector x) is made 6, and so from here onwards a number of measurement points m is assumed to be 6 or greater, but this is not limiting and if the number of unknowns is 5 or less it is possible to make the number of measurement points m 5 or less. A number for the number of measurement points in a case where position and shape of an object are unknown generally needs to be larger than a number of unknowns. Generally, as the number of measurement points is increased the calculation cost increases, but measurement precision becomes higher. A specific example of solving equation (7) will be described in the following.

$$R \approx \begin{pmatrix} 1 & \gamma & -\alpha \\ -\gamma & 1 & \beta \\ \alpha & -\beta & 1 \end{pmatrix} \tag{6}$$

$$A\boldsymbol{x} = \boldsymbol{b}, \qquad \boldsymbol{x} = A^+ \boldsymbol{b} \tag{7}$$

$$A = \begin{pmatrix} (\boldsymbol{q}_1 \times \boldsymbol{l}_1)^{\mathrm{T}} & \boldsymbol{l}_1^{\mathrm{T}} \\ (\boldsymbol{q}_2 \times \boldsymbol{l}_2)^{\mathrm{T}} & \boldsymbol{l}_2^{\mathrm{T}} \\ \vdots & \vdots \\ (\boldsymbol{q}_m \times \boldsymbol{l}_m)^{\mathrm{T}} & \boldsymbol{l}_m^{\mathrm{T}} \end{pmatrix}, \boldsymbol{x} = \begin{pmatrix} \alpha \\ \beta \\ \gamma \\ T_x \\ T_y \\ T_z \end{pmatrix}, \boldsymbol{b} = \begin{pmatrix} v_1 \\ v_2 \\ \vdots \\ v_m \end{pmatrix}$$

(Utilization Of Generalized Tikhonov Regularization Solution)

The solution for matricial equation Ax=b is generally expressed using a Moore-Penrose pseudo inverse matrix. However, since equation (7) is an inverse problem for reconstructing three-dimensional motion of an object from fragmentary motion information of each measurement point, there is a possibility of an ill-posed problem arising whereby solution stability is not be obtained. For this type of problem, steps are often performed to numerically stabilize the solution using Tikhonov regularization. However, the solution x obtained with this example includes angular parameters and distance parameters in that element. This means that with Tikhonov regularization using a single regularization parameter, it is difficult to appropriately regularize these two physical quantities. Generalized Tikhonov regularization, which has been expanded so as to be able to handle a problem that includes a plurality of physical quantities, is therefore introduced. In equation (8) below, the pseudo inverse matrix $A^+_{GT}$ is represented using generalized Tikhonov regularization. $A^+_{GT}$ has regularization parameters $\lambda_k$ (k=1, 2, ..., n) corresponding to each element of vector x, and it is possible to obtain the most suitable vector x, meaning the weighted Euclidean distance shown in equation (9) . With this embodiment, by solving equation (7) using this $A^+_{GT}$ it is possible to perform calculation of rotation and translation motion of an object from detection values $v_i$ and $d_i$ from the speed detection section 11 and the distance detection section 12.

$$A^+_{GT} = (A^{\mathrm{T}}A + \mathrm{diag}[\lambda^2_1, \lambda^2_2, \ldots, \lambda^2_n])^{-1}A^{\mathrm{T}} \qquad (8)$$

$$A^+_{GT}\boldsymbol{b} = \arg \min_{\boldsymbol{x}} \left( \|A\boldsymbol{x} - \boldsymbol{b}\|^2_2 + \sum_{k=1}^{n} \lambda^2_k x^2_k \right) \qquad (9)$$

Accordingly, the motion calculation section 13 of this embodiment can calculate motion of the object 100, specifically rotation R and translation T of that motion, by obtaining solution x as described previously.

With this embodiment, it is possible to detect three-dimensional motion (rotation and translation) of the object 100 independently of shape and pattern of the object. This means that it is possible to detect motion of an unknown object. Also, with the device of this embodiment it becomes possible to detect that motion even if an object is unexpectedly huge.

There is also the advantage, with this embodiment, that compared to a conventional method that uses image feature amounts, since it is possible to calculate motion using computation having a low calculation cost, it becomes possible to perform motion detection at high speed or in real time.

It should be noted that as the previously described regularization parameters $\lambda_k$, it is possible to obtain most suitable values experimentally in accordance with the system that is used. For example, taking into account differences in physical quantity, it is possible to adopt diag[6.0, 4.0, 4.0, 0.05, 0.05, 0.0] as minimum values for which a solution is stable at the time an object is stationary, but the parameters are not restricted to this. Also, with this embodiment, while wavelengths of the laser beams used by the distance detection section 12 and the speed detection section 11 can be made 875 and 633 [nm] respectively, for example, and oscillation angle $\theta$ in the direction of a light beam from the direction control section 14 is about 10°, for example, these values are not limiting.

It is also possible to use the motion detection device of this embodiment for object tracking. That is, it is possible to detect motion of an object, and to continue motion measurement of the object while tracking the object in the motion direction with the direction control section 14.

It is also possible to load the motion detection device of this embodiment on to a moving body, and detect relative movement of the environment with respect to this device while moving. In this manner it is possible to detect movement of a moving body (for example, a motor vehicle or a train) with respect to a road surface. It is also possible, for example, while a moving body is moving within a tunnel, to examine the shape of the tunnel wall surface or roof continuously and with high precision.

(Motion Detection Device Of A Second Embodiment)

Next, a motion detection device of a second embodiment of the present invention will be described with further reference to Fig. 4. In the description of this second embodiment, structural elements that are basically common to the first embodiment described above will be assigned the same reference numerals, and redundant description be avoided.

In the first embodiment described above, speed $v_i$ and distance $d_i$ for a plurality of points $p_i$ were acquired by changing direction of a laser beam at high speed using the direction control section 14. Conversely, with the motion detection device of the second embodiment the direction control section 14 is omitted and instead a plurality of detection units 17 are used. Each unit 17 comprises a speed detection section 11, distance detection section 12 and dichroic mirror 15 (refer to Fig. 4). With this second embodiment a number of units 17 corresponding to the number of measurement points (for example, six) are used. In this way it is possible to improve simultaneity at the time of measuring at a plurality of points, and there is the advantage that it is also possible to handle detection of high-speed motion of the object 100.

Other structures and advantages of the second embodiment are basically the same as those of the previous described first embodiment, and so more detailed description has been omitted.

(Third Embodiment)

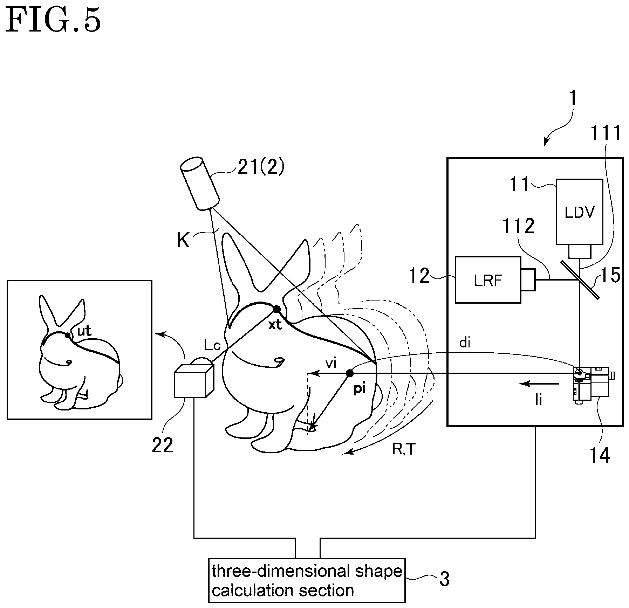

Next, a three-dimensional shape measuring device of a third embodiment of the present invention will be described with further reference to Fig. 5. In the description of this third embodiment, structural elements that are basically common to the first embodiment described above will be assigned the same reference numerals, and redundant description be avoided.

This three-dimensional shape measuring device comprises, in addition to the motion detection device 1 that was described in the first embodiment, a shape detection section 2 and a three-dimensional shape calculation section 3.

(Structure Of Third Embodiment)

The shape detection section 2 comprises a line laser 21 and a camera 22. The line laser 21 is configured to irradiate a laser beam, that has a certain degree of width, to an object 100. A known line laser can be used as this type of line laser, and so detailed description thereof is omitted.

The camera 22 can detect, in time series, shapes of a line type laser beam that has been projected onto the surface of the object 100 by shooting the object 100 at given time intervals. In this way, the shape detection section 2 of this embodiment is configured to detect shape of the object 100 at specified time points in time series.

The three-dimensional shape calculation section 3 is configured to calculate three-dimensional shape of the object 100 using information on shapes of the object that have been detected in time series (specifically, shapes of lines that have been photographed) and on motion that has been detected by the motion detection device 1. Detailed operation of the three-dimensional shape calculation section 3 will be described later.

(Operation Of Third Embodiment)

A measurement method that uses the three-dimensional shape measuring device of the third embodiment will be described in the following. With the third embodiment, it is possible to calculate three-dimensional shape of an object 100 at a line position based on the principle of triangulation, by shooting a reflected beam (configured in a line shape) that has been irradiated to the object 100 from the line laser 21 using a camera 22. This type of method is also called a light-section method. A method that uses a line laser has the advantage that a device is simple and cost reduction can be anticipated.

With a light-section method, overall shape of the object is normally acquired by scanning a line laser. Conversely, with the third embodiment it is possible to cause the object 100 to move relatively with respect to a line laser as a result of the object 100 moving.

It should be noted that instead of a line laser it is also possible to utilize a system that acquires shapes at a surface, using a structured light system of a two-dimensional pattern or the like.

(Principle Of Three-Dimensional Shape Measurement)

In the following, a three-dimensional coordinate system that has an optical center of a camera as an origin will be considered, and this coordinate system will be called a camera coordinate system. It should be noted that observation is performed with a single point on an object that has been irradiated with a laser beam (sometimes called a "line laser beam") that has been irradiated from the line laser 21 made $u_t = [u, v]^T$ in a camera image for time t. A position of this point in the camera coordinate system is made $x_t = [X, Y, Z]^T$. Also, a parameter P within the camera is set as follows.

$$P = \begin{bmatrix} fk_x & 0 & o_x \\ 0 & fk_y & o_y \\ 0 & 0 & 1 \end{bmatrix} \quad (10)$$

Here, $[o_x, o_y]$ is image center, f is focal length, and $[k_x, k_y]$ is effective size of an image. If this internal parameter P is used, it is possible to represent $x_t$ as follows.

$$x_t = sP^{-1}U \quad (11)$$

Here, s is an unknown scalar, and U is a homogenous coordinate system representation of u, where U=[u$^T$, 1]$^T$. This shows that $x_t$ is on a straight line $L_c$ that passes through the origin of the camera coordinate system. This assumes that as a result of calibration between the line laser 21 and the camera 22, a coefficient k=[a, b, c]$^T$, for the following equation with which point x=[X, Y, Z]$^T$ on a line laser plane K (refer to Fig. 5) in the camera coordinate system is satisfied, is acquired.

$$ \boldsymbol{k}^{\mathrm{T}} \boldsymbol{x} = 1 \qquad (12) $$

At this time, $x_t$ is determined by the following equation, from the previously described equations (11) and (12)

$$ \boldsymbol{x}_t = \frac{P^{-1}U}{\boldsymbol{k}^{\mathrm{T}} P^{-1} U} \qquad (13) $$

Regarding other points also, it is possible to obtain shape of a portion of an object that is being irradiated with a line laser as a three-dimensional point group by performing conversion to the same three-dimensional coordinate system. With the three-dimensional shape calculation section 3 it is possible to combine motion information of an object with a three-dimensional point group (for example, a curve on a three dimensional space) at specified time points in this way using an alignment method that will be described later, to calculate three-dimensional shape.

(Alignment Method)

Initially, three-dimensional points $\{x_t\}_c$ that have been acquired in the camera coordinate system are converted to three dimensional points $\{x_t\}_g$ in a Galvano coordinate system (coordinate system having the vicinity of a center of rotation of a mirror of the Galvano mirror of the direction control section 14 as an origin). Coordinate system conversion is represented as shown in equation (14) below, using $R_{cg}$, $T_{cg}$ that have been obtained as a result of calibration of the camera coordinate and the Galvano coordinates. Here, $R_{cg}$ is rotation matrix for from camera coordinates to Galvano coordinates, and $T_{cg}$ is a translation vector for from the Galvano coordinates origin to the camera coordinates origin.

$$ \{\boldsymbol{x}_t\}_g = R_{cg}\{\boldsymbol{x}_t\}_c + \boldsymbol{T}_{cg} \qquad (14) $$

In the following, the three-dimensional point $\{x_t\}_g$ that has been converted to the Galvano coordinate system is written as $x_t$ for simplicity.

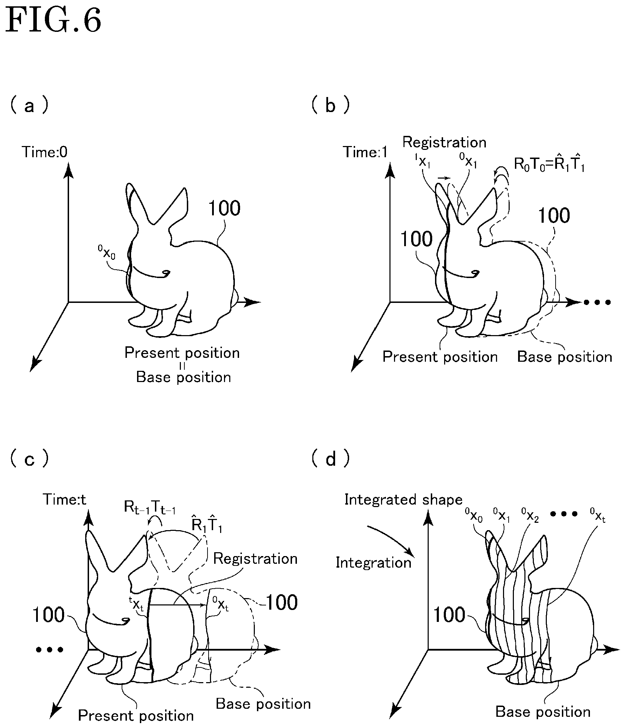

Then, as shown in Fig. 6 (a) to (d), alignment is performed for a group of three-dimensional points that have been acquired at each time, with position and posture of an object at time 0 as a reference. In the following, for simplicity, frame rates for motion detection by the motion detection device 1 and shape measurement by the shape detection section 2 are made the same, and rotational movement, translational movement, and center of rotation acquired as a result of motion detection from time t to time t+1, are respectively represented by $R_t$, $T_t$, and gt. Also, regarding change in object position and posture from time t0 (refer to Fig. 6(a)) to time t (refer to Fig. 6 (b) and (c)), a component represented by rotation with the origin as a center of rotation is made $R_t$hat, and a component that is represented by translation is made $T_t$hat. Further, a three dimensional point $x_{t1}$ that has been acquired at time $t_1$ is integrated with position and posture of the object at time $t_2$ as a reference, to become $^{t2}x_{t1}$.

It is intended that a three-dimensional point $^tx_t$ that has been acquired at time t (refer to Fig. 6 (c)) is to be integrated with a three dimensional point $^0x_t$ (refer to Fig. 6(d)), with position and posture of the object at time 0 (refer to Fig. 6(a)) made a reference. First, change in position and posture of the object, $R_t$hat, $T_t$hat, for from time 0 to time t, are calculated using motion information $R_i$, $T_i$, $g_i$ (i=0, 1, ... , t-1) that has been acquired by motion detection from time t0 to t-1. Three dimensional point $^tx_t$ is aligned with $^0x_t$ based on this $R_t$hat, $T_t$hat. The integration is carried out by converting all of $^0x_0$, $^1x_1$, ... , $^tx_t$ that have been acquired from time 0 to time t to $^0x_0$, $^0x_1$, ... , $^0x_t$ with position and posture at time 0 made a reference. At this time, the following equations hold for an arbitrary j.

$$^{t+1}\boldsymbol{x}_j = R_t(^t\boldsymbol{x}_j - \boldsymbol{g}_t) + \boldsymbol{T}_t + \boldsymbol{g}_t \qquad (15)$$

$$^t\boldsymbol{x}_j = \hat{R}_t{}^0\boldsymbol{x}_j + \hat{\boldsymbol{T}}_t \qquad (16)$$

From equations (15) and (16), the following recurrence formulas hold.

$$\hat{R}_{t+1} = R_t\hat{R}_t \qquad (17)$$

$$\hat{\boldsymbol{T}}_{t+1} = R_t\hat{\boldsymbol{T}}_t + \boldsymbol{T}_t + (I - R_t)\boldsymbol{g}_t \qquad (18)$$

Using these recurrence formulas it is possible to successively acquire $R_t$hat, $T_t$hat from $R_{t-1}$hat and $T_{t-1}$hat of the previous frame and $R_{t-1i}$, $T_{t-1}$, $g_{t-1}$ that have been acquired by motion detection. However, $R_0$hat=I and $T_0$hat=0 hold. By substituting this successively into equation (19) below that has been obtained from transformation of equation (16) it is possible to obtain $^0x_j$ for an arbitrary j (refer to Fig. 6(d)).

$$^0\boldsymbol{x}_j = \hat{R}_t^{-1}(^t\boldsymbol{x}_j - \hat{\boldsymbol{T}}_t) \qquad (19)$$

Accordingly, it is possible to calculate three-dimensional shape for the object 100 by carrying out the previously described calculations in the three-dimensional shape calculation section 3 of this embodiment. The three-dimensional shape that has been obtained can be output using an appropriate method. The shape information may be appropriately output to a display, printer, memory or other system as required.

It should be noted that the content of the present invention is not limited to the described embodiments. Various modifications are possible to the specific structure of the present invention, within the scope described in the patent claims.

For example, with each of the embodiments described previously the first laser beam and the second laser beams were configured to be separated by wavelength, but in a case where high speed switching is possible it is also possible to separate the two laser beams by time. If this is done it is possible to omit the provision of the dichroic mirror 15. It is also possible in this case to make the wavelength of the first laser beam and the second laser beam the same.

Further, with each of the previously described embodiments, position $p_i$ on the object has been converted to $q_i$ in another coordinate system, but this is in order to avoid calculation of a vector product $(p_i \times l_i)^T$ in equation (6) becoming a zero vector. That is, if a vector $p_i$ becomes parallel to a vector $l_i$, a resulting vector product will become a zero vector, which will disrupt the calculation. Accordingly, as long as it is possible to avoid a vector product becoming a zero vector, any type of conversion may be used.

Also, the previously described laser beam irradiation pattern is merely an example, and the present invention is not limited to this irradiation pattern. The irradiation pattern may be changed dynamically depending on the properties of an object.

Also, each of the above-described structural elements, such as the motion calculation section and the three-dimensional shape calculation section, can exist as a functional block, and need not exist as independent hardware. Also, as an implementation method, hardware may be used and computer software may be used. Further, a single functional element of the present invention may be realized by a combination of a plurality of functional elements, and a plurality of functional elements of the present invention may be realized by a single functional element.

Further, the previously described functional elements may be located at positions that are physically separated from one another. In this case, associated functional elements may be connected by means of a network. Functions may be realized by means of grid computing or cloud computing, and alternatively functional elements may also be constituted.

Description of the Numerals

1 motion detection device
11 speed detection section
111 first laser beam
12 distance detection section
121 second laser beam
13 motion calculation section
14 direction control section
15 dichroic mirror
17 detection unit
2 shape detection section
21 line laser
22 camera
3 three-dimensional shape calculation section
100 object
$d_i$ distance
$v_i$ speed
$l_i$ laser orientation
$p_i$ laser irradiation position
q position acquired using p coordinate conversion

**Claims**

1. A motion detection device, comprising a speed detection section, a distance detection section and a motion calculation section, wherein:

   the speed detection section irradiates a first laser beam towards an object and detects speed of the object using the first laser beam that has been reflected by the object;
   the distance detection section irradiates a second laser beam towards the object and detects distance to the object using the second laser beam that has been reflected by the object;
   the second laser beam being configured to be irradiated at substantially the same time and to substantially the same position as the first laser beam; and
   the motion calculation section calculates motion of the object using information on orientation of the first and second laser beams, the speed, and the distance.

2. The motion detection device of claim 1, wherein the first laser beam and the second laser beam irradiate the object on substantially the same axis.

3. The motion detection device of claim 1 or claim 2, wherein the motion calculation section is configured to calculate the motion using information on the speed and the distance at a plurality of points on the object.

4. The motion detection device of any one of claims 1 to 3, wherein motion of the object is rotational and translational motion of the object.

5. The motion detection device of any one of claims 1 to 4, further comprising a direction control section, wherein: the direction control section is configured to control orientation of the first laser beam and the second laser beam.

6. The motion detection device of any one of claims 1 to 5, wherein the motion calculation section is configured to calculate irradiation position p of the first and second laser beams on the object using information on the orientation of the first and second laser beams and the distance, converts the irradiation position p to a position q in a different coordinate system, and calculates motion of the object using the position q and the speed.

7. The motion detection device of any one of claims 1 to 6, wherein the first laser beam and the second laser beam have different wavelengths.

8. A three-dimensional shape measurement device comprises the motion detection device of any one of claims 1 to 7, a shape detection section and a three-dimensional shape calculation section, wherein:

the shape detection section detects shapes at specified points on the object in time series; and
the three-dimensional shape calculation section calculates a three-dimensional shape of the object using information on the shapes that have been detected in time series and the motion.

9. A motion detection method, comprising:

a step of detecting speed of an object using a reflected beam of a first laser beam that has been irradiated towards the object;
a step of detecting distance to the object using a reflected beam of a second laser beam that has been irradiated towards the object; and
a step of calculating motion of the object using information on orientation of the first laser beam and the second laser beam, the speed, and the distance.

# FIG.1

# FIG.2

Scanning pattern

# FIG.3

```
SA-1 ──  speed detection          position detection  ── SA-2
              │                         │
              └────────────┬────────────┘
                           ▼
         calculation of position on object  ── SA-3
                           │
                           ▼
         coordinate conversion of position  ── SA-4
                           │
                           ▼
            calculation of motion  ── SA-5
```

# FIG.4

# FIG.5

# FIG.6

( a )

Time:0

$^0x_0$

100

Present position
‖
Base position

( b )

Time:1

Registration

$^1x_1$　$^0x_1$

$R_0T_0=\hat{R}_1\hat{T}_1$

100

100

Present position　　Base position

( c )

Time:t

$R_{t-1}T_{t-1}$

$\hat{R}_1\hat{T}_1$

Registration

100

$^tx_t$　$^0x_t$

100

Present position　　Base position

( d )

Integrated shape

Integration

$^0x_0$　$^0x_1$　$^0x_2$　• • •　$^0x_t$

100

Base position

## INTERNATIONAL SEARCH REPORT

International application No.

PCT/JP2016/074907

| A. CLASSIFICATION OF SUBJECT MATTER |
|---|
| *G01S17/58*(2006.01)i, *G01B11/24*(2006.01)i, *G01B21/00*(2006.01)i, *G01C3/06* (2006.01)i, *G01P3/36*(2006.01)i, *G01S17/89*(2006.01)i |

According to International Patent Classification (IPC) or to both national classification and IPC

| B. FIELDS SEARCHED |
|---|
| Minimum documentation searched (classification system followed by classification symbols) |
| G01S7/48-7/51, 17/00-17/95, G01B11/00-11/30, 21/00-21/32, G01C3/00-3/32, G01P1/00-3/80 |

Documentation searched other than minimum documentation to the extent that such documents are included in the fields searched
Jitsuyo Shinan Koho　　　　1922-1996　Jitsuyo Shinan Toroku Koho　1996-2016
Kokai Jitsuyo Shinan Koho　1971-2016　Toroku Jitsuyo Shinan Koho　1994-2016

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2012-518793 A (Digital Signal Corp.),<br>16 August 2012 (16.08.2012),<br>paragraphs [0012] to [0095]; fig. 1 to 2<br>& US 2010/0271615 A1<br>paragraphs [0026] to [0118]; fig. 1 to 2<br>& WO 2010/141120 A2　　& EP 2399150 A2<br>& CA 2753197 A1　　　　& AU 2010257107 A1<br>& CN 102378919 A　　　& HK 1167463 A1 | 1-9 |
| Y | US 4822164 A (BREEN, Michael T.),<br>18 April 1989 (18.04.1989),<br>specification, 2nd paragraph, line 28 to 7th<br>paragraph, line 28; fig. 1 to 2<br>(Family: none) | 1-9 |

| ☒ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 November 2016 (08.11.16) | 22 November 2016 (22.11.16) |

| Name and mailing address of the ISA/<br>Japan Patent Office<br>3-4-3,Kasumigaseki,Chiyoda-ku,<br>Tokyo 100-8915,Japan | Authorized officer<br><br>Telephone No. |
|---|---|

Form PCT/ISA/210 (second sheet) (January 2015)

**INTERNATIONAL SEARCH REPORT**

International application No.

PCT/JP2016/074907

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-516246 A  (Leica Geosystems AG),<br>15 May 2008 (15.05.2008),<br>entire text; all drawings<br>& US 2009/0033945 A1<br>entire text; all drawings<br>& WO 2006/039820 A1    & EP 1647838 A1<br>& DE 502004011107 D    & CA 2584347 A1<br>& CN 101076743 A       & AT 466298 T<br>& AU 2005294044 A1 | 1-9 |
| A | JP 2008-514967 A  (FARO Technologies, Inc.),<br>08 May 2008 (08.05.2008),<br>entire text; all drawings<br>& US 2006/0066836 A1<br>entire text; all drawings<br>& WO 2006/039682 A1    & EP 1794620 A1<br>& CN 101031817 A | 1-9 |
| A | JP 2005-502053 A  (Rosemount Aerospace Inc.),<br>20 January 2005 (20.01.2005),<br>entire text; all drawings<br>& US 2003/0043364 A1<br>entire text; all drawings<br>& WO 2003/021285 A2    & EP 1423732 A2<br>& DE 60234197 D        & IL 160711 D<br>& AU 2002322525 B2 | 1-9 |
| A | JP 2000-266851 A  (Minolta Co., Ltd.),<br>29 September 2000 (29.09.2000),<br>entire text; all drawings<br>(Family: none) | 1-9 |
| A | JP 2009-014701 A  (Yamatake Corp.),<br>22 January 2009 (22.01.2009),<br>entire text; all drawings<br>& US 2008/0304042 A1<br>entire text; all drawings<br>& EP 2015021 A2        & CN 101319892 A<br>& KR 10-2008-0107301 A  & TW 200916731 A | 1-9 |
| A | JP 05-092216 A  (Kawasaki Steel Corp.),<br>16 April 1993 (16.04.1993),<br>entire text; all drawings<br>(Family: none) | 1-9 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ZERROUG, A. ; CASSINELLI, A. ; ISHIKAWA, M.** Invoked computing: Spatial audio and video AR invoked through miming. *In Proc. VRIC '11,* 2011
- **VLASIC, D. ; ADELSBERGER, R. ; VANNUCCI, G. ; BARNWELL, J. ; GROSS, M. ; MATUSIK, W. ; POPOVI'C, J.** Practical Motion Capture in Everyday Surroundings. *ACM Trans. Graph.,* 2007, vol. 26 (3
- **KETABDAR, H. ; YU''KSEL, K. A. ; ROSHANDEL, M.** MagiTact: Interaction with Mobile Devices Based on Compass (Magnetic) Sensor. *In Proc. ACM IUI '10,* 2010

- **KLEIN, G. ; MURRAY, D.** Parallel Tracking and Mapping for Small AR Workspaces. *In Proc. ISMAR '07,* 2007
- **LEPETIT, V. ; MORENO-NOGUER, F. ; FUA, P.** EP-nP: An Accurate O(n) Solution to the PnP Problem. *Int. J. Comput. Vision,* 2009, vol. 81 (2
- **GRANGER, S. ; PENNEC, X.** Multi-scale EM-ICP: A Fast and Robust Approach for Surface Registration. *In Proc. ECCV '02,* 2002
- **SHOTTON, J. ; FITZGIBBON, A. ; COOK, M. ; SHARP, T. ; FINOCCHIO, M. ; MOORE, R. ; KIPMAN, A. ; BLAKE, A.** Real-Time Human Pose Recognition in Parts from a Single Depth Image. *In Proc. IEEE CVPR '11,* 2011